# EUROPÄISCHE PATENTSCHRIFT

(11) **EP 1 877 290 B1**
(45) Veröffentlichungstag und Bekanntmachung des Hinweises auf die Patenterteilung: **03.07.2013**
(21) Anmeldenummer: 06725106.6
(22) Anmeldetag: 16.03.2006
(51) Int. Cl.: B60S 1/40

(54) **WISCHARM MIT EINEM WISCHBLATT**
WIPER ARM WITH A WIPER BLADE
BRAS D'ESSUIE-GLACE AVEC UN BALAI D'ESSUIE-GLACE

(30) Priorität: 28.04.2005 DE 102005019389
(43) Veröffentlichungstag der Anmeldung: 16.01.2008
(73) Patentinhaber: ROBERT BOSCH GMBH, 70442 Stuttgart (DE)
(72) Erfinder: KINNAERT, Erik, B-3700 Tienen (BE); WILMS, Christian, B-3582 Koersel-Beringen (BE); WINDMOLDERS, Eric, B-3510 Kermt (BE); CLAES, Dave, B-3150 Tildonk (BE)
(86) Internationale Anmeldenummer: PCT/EP2006/060795
(87) Internationale Veröffentlichungsnummer: WO 2006/114355

(56) Entgegenhaltungen:
- EP-A- 1 323 601
- DE-A1- 10 160 111
- DE-A1- 10 305 322
- DE-A1- 10 330 218
- FR-A1- 2 846 617
- US-A1- 2004 250 369

## Beschreibung

### Stand der Technik

Die Erfindung geht von einem Wischarm mit einem Wischblatt nach dem Oberbegriff des Anspruchs 1 aus.

Aus der DE 101 13 680 A1 ist ein Scheibenwischer mit einem Wischblatt bekannt, das über ein so genanntes "Sidelock-System" mit einem Wischarm gelenkig verbunden ist. Hierzu dient ein Anschlusselement, das mit angeformten Formschlusselementen die als Tragelement dienenden Federschienen des Wischblatts seitlich und von unten umfasst. Eine Abdeckkappe aus Kunststoff überdeckt das in der Regel aus Blech gefertigte Anschlusselement. Ein mit dem freien Ende des Wischarms, z.B. einer Wischstange des Wischarms, verbundenes Verbindungselement besitzt einen Lagerstift, der seitlich und quer zur Längsrichtung des Wischarms und zu dem Wischblatt zeigend in das Verbindungselement eingesetzt und vorzugsweise verschweißt oder vernietet ist. Der Lagerstift ist in einer Lagerbohrung des Anschlusselements schwenkbar gelagert. Das Verbindungselement kann gieß- oder spritztechnisch mit dem Lagerstift und einem Sicherungselement in Form eines Bügels separat in einem Stück gefertigt sein und auf das Ende der im Querschnitt rechteckigen Wischstange des Wischarms geschoben und dort befestigt werden.

Aus der DE-A-10330218 ist ein weiteres Wischblatt in Flachbalkenbauweise bekannt.

Parallel zum Lagerstift ist am Verbindungselement in Längsrichtung zum Antriebsende hin versetzt der Bügel angeordnet, der an seinem freien Ende zur Seite des Wischblatts hin abgewinkelt ist. In einer Montageposition, in der das Wischblatt quer zur Längsrichtung des Wischarms gehalten wird, kann der Lagerstift in eine Lagerbohrung des Anschlusselements geschoben werden. Wird das Wischblatt anschließend parallel zur Längsrichtung des Wischarms gedreht, übergreift der Bügel die Abdeckkappe und das Anschlusselement und verriegelt es mit seinem abgewinkelten Ende, sodass seitliche Führungsflächen der Abdeckkappe im montierten Zustand zwischen dem abgewinkelten Ende des Brückenelements und einer gegenüberliegenden Fläche des Verbindungselements geführt werden. Der Bügel taucht in der Betriebsstellung des Wischblatts in eine entsprechende Nut an der Oberseite der Abdeckkappe ein und schließt etwa bündig ab. Zur Demontage muss das Wischblatt in die entgegengesetzte Richtung geschwenkt werden, bis das abgewinkelte Ende außer Eingriff gebracht ist und das Wischblatt vom Lagerstift gezogen werden kann. Das Wischblatt besitzt an seiner Oberseite einen Spoiler. Er erhöht mit zunehmendem Fahrtwind den Anpressdruck des Wischblatts gegen die Fahrzeugscheibe. Zum Anschlusselement hin greift der Spoiler in Aussparungen des Anschlusselements, die der Außenkontur des Spoilers angepasst sind. Der Wischarm bzw. die Wischstange liegt auf der Anströmseite des Spoilers und deckt diesen teilweise ab.

Aus der GB 2 140 287 B ist ein Scheibenwischer mit einem Wischblatt bekannt, dessen Tragbügelsystem nach dem Sidelock-Prinzip gelenkig mit einer Wischstange eines Wischarms verbunden ist. Das Wischblatt weist zu beiden Seiten der Sidelock-Verbindung einen Spoiler auf, wobei der Wischarm mit seiner Wischstange auf der Anströmseite des Spoilers und des Wischblatts angeordnet ist. Die wischstange, die an einem Ende mit einem Gelenkteil des Wischarms fest verbunden ist, besitzt einen rechteckigen Querschnitt, dessen breite Seite an den Enden etwa parallel zu der Fahrzeugscheibe verläuft, während sie zwischen den Endbereichen um die Längsachse so verdreht ist, dass sie zur Unterstützung des Spoilers geneigt zur Fahrzeugscheibe verläuft. Es sind auch Ausführungen bekannt, bei denen die Wischstange gerade ist, und die Neigung zur Fahrzeugscheibe durch eine entsprechende Gestaltung des Gelenkteils und ein entsprechend gestaltetes Verbindungselement am anderen Ende der Wischstange erreicht wird.

### Vorteile der Erfindung

Nach der Erfindung weist das Anschlusselement eine Abdeckkappe auf und die Abdeckkappe weist an ihrer von dem Gummiprofil abgewandten Seite im Bereich des Verbindungselements eine Öffnung oder Vertiefung für das abgewinkelte Ende des Bügels auf, der in montierter Position nur teilweise die Abdeckkappe übergreift, wobei die Abdeckkappe auf der Abströmseite eine durchgehende glatte Außenwand aufweist. Dadurch wird vermieden, dass bei der Abwärtsbewegung des Wischblatts in die untere Umkehrlage bzw. Parkposition vom Bügel Wasser auf die gereinigte Fahrzeugscheibe nachspritzt. Ferner ist es vorteilhaft, dass eine Deckwand der Abdeckkappe unterhalb des Bügelelements von der Öffnung nach außen geneigt zur Anströmrichtung abfällt, sodass das Wasser besser zur abwärts gerichteten Seite des Wischblatts abfließen und nach unten weg gewischt werden kann.

Um die seitliche Führung des Wischblatts durch das Verbindungselement zu verbessern, ist es zweckmäßig, dass die Abdeckkappe an der Öffnung bzw. der Vertiefung und an einer dem Wischarm zugewandten Außenseite Führungsrippen besitzt, an denen das abgewinkelte Ende des Bügels bzw. die Wischstange oder das Verbindungselement anliegt. Die Führungsrippen können mit einem geringen Spiel zum Verbindungselement bzw. Wischarm hergestellt werden, ohne die Leichtgängigkeit der Schwenkbewegung des Wischblatts zu beeinträchtigen. Die Führungsrippen an der Außenseite der Abdeckkappe verhindern zusätzlich eine Fehlmontage. Sie sorgen dafür, dass der Lagerstift maximal drei Millimeter in die Lageröffnung gesteckt werden kann, wenn man versucht, das Wischblatt parallel zum Wischarm zu montieren.

Besitzt das Wischblatt einen Spoiler, geht die Abdeckkappe an ihren Enden zweckmäßigerweise mit einem Anschlussprofil harmonisch in das Profil des Spoilers über, sodass die Wirkung des Spoilers durch das Anschlusselement und die Abdeckkappe möglichst wenig gestört wird. Hierzu dient auch, dass die Wischstange des Wischarms, die einen rechteckigen Querschnitt aufweist, wenn sie auf der Anströmseite des Wischblatts verläuft, um ihre Längsachse so verdreht ist, dass mindesten im Bereich des Wischblatts ihre Breitseite zur Unterstützung des Spoilers geneigt zur Anströmrichtung verläuft und ihr Ende mit der Breitseite parallel zu den Führungsrippen an der Außenseite der Abdeckkappe gerichtet ist.

Das Verbindungselement kann in einfacher Weise an der Wischstange befestigt werden, wenn es gemäß einer Ausgestaltung der Erfindung eine parallel zu einer breiten Seite der Wischstange verlaufende Befestigungsplatte besitzt, an der der Bügel angeformt ist. Dabei weist der Lagerstift an einem Ende einen Nietzapfen auf, mit dem die Befestigungsplatte an der Wischstange befestigt ist. Der Nietzapfen, der in vorteilhafter Weise in der Befestigungsplatte mittels eines Presssitzes vormontiert sein kann, wird durch eine Öffnung am Ende der Wischstange gesteckt und vernietet bzw. getaumelt. Um zu vermeiden, dass die Befestigungsplatte sich unter der Belastung während des Wischbetriebs gegenüber der Wischstange verdreht, besitzt das Verbindungselement an seinen Längsseiten zur Wischstange gebogene, krampenförmige Ränder, die mit einem Presssitz an der Außenkontur des Endes der Wischstange im Bereich ihrer Kuppen anliegen. Dabei kann der lichte Abstand zwischen den krampenförmigen Rändern kleiner sein als die Breite des Endes der Wischstange, sodass sich beim Zusammenfügen quer zur Wischstange der Presssitz ergibt. Eine weitere Möglichkeit besteht darin, dass der lichte Abstand zwischen den krampenförmigen Rändern größer ist als die Breite des Endes der Wischstange, sodass sich durch Verkrimpen der krampenförmigen Ränder der Presssitz ergibt.

Zweckmäßigerweise überdeckt die Befestigungsplatte mit einem Stirnwinkel die Stirnseite des Endes der Wischstange. Dadurch werden gegebenenfalls scharfe Kanten an der Wischstange abgedeckt.

Um eine strömungsgünstige Form der verbindung zwischen dem Verbindungselement und der Wischstange zu erreichen und das Design des Wischblatts zu verbessern, wird gemäß einer weiteren Ausgestaltung der Erfindung vorgeschlagen, dass die Befestigungsplatte auf der Innenseite des Endes der Wischstange angebracht ist und auf der gegenüberliegenden Außenseite eine Abdeckung vorgesehen ist. Diese überdeckt zweckmäßigerweise mit einer Stirnwand die Stirnseite des Endes der Wischstange und des Verbindungselements. Die Abdeckung kann an dem Ende der Wischstange befestigt werden, in dem ein Rastzapfen der Abdeckung in ein Rastloch des Endes der Wischstange eingeklippst wird. Auch können an den Rändern der Abdeckung Klippvorrichtungen angebracht sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
Fig. 1 eine perspektivische Teilansicht eines Wischblatts an einer Wischstange,
Fig. 2 eine Draufsicht auf eine Abdeckkappe eines Anschlusselements,
Fig. 3 eine perspektivische Ansicht einer Abdeckkappe nach Fig. 2,
Fig. 4 einen Schnitt entsprechend der Linie IV-IV in Fig. 1,
Fig. 5 eine perspektivische Teilansicht eines
Verbindungselements an einer Wischstange,
Fig. 6 eine Ansicht in Längsrichtung des Wischarms,
Fig. 7 eine perspektivische Ansicht eines Verbindungselements ohne eine Wischstange,
Fig. 8 ein Montagequerschnitt durch ein Verbindungselement und eine Wischstange,
Fig. 9 eine Variante zu Fig. 8,
Fig. 10 eine teilweise Explosionsdarstellung eines Verbindungselements mit einer Wischstange und einer Abdeckung und
Fig. 11 eine Variante zu Fig. 5.

### Beschreibung der Ausführungsbeispiele

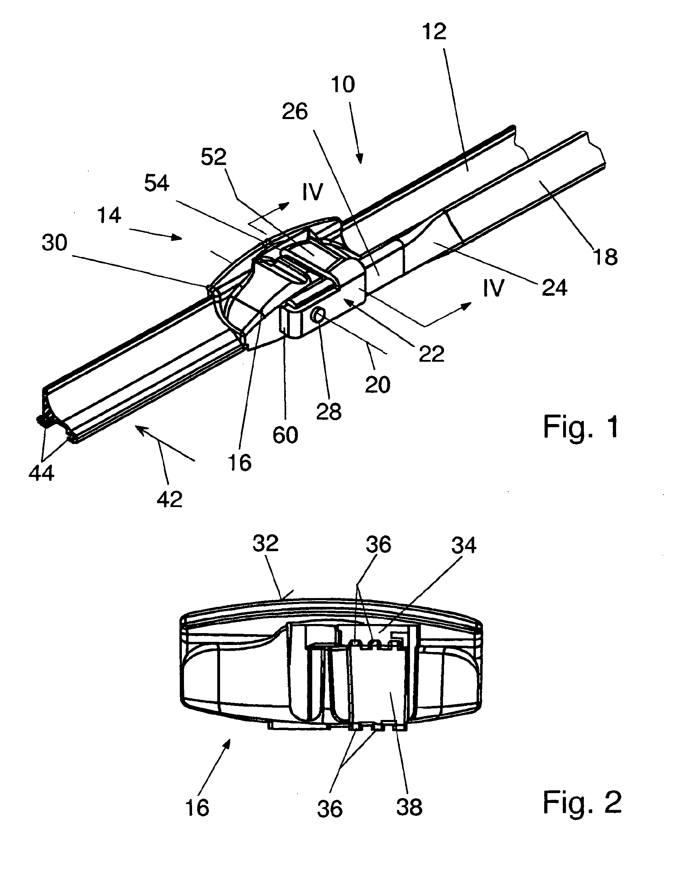

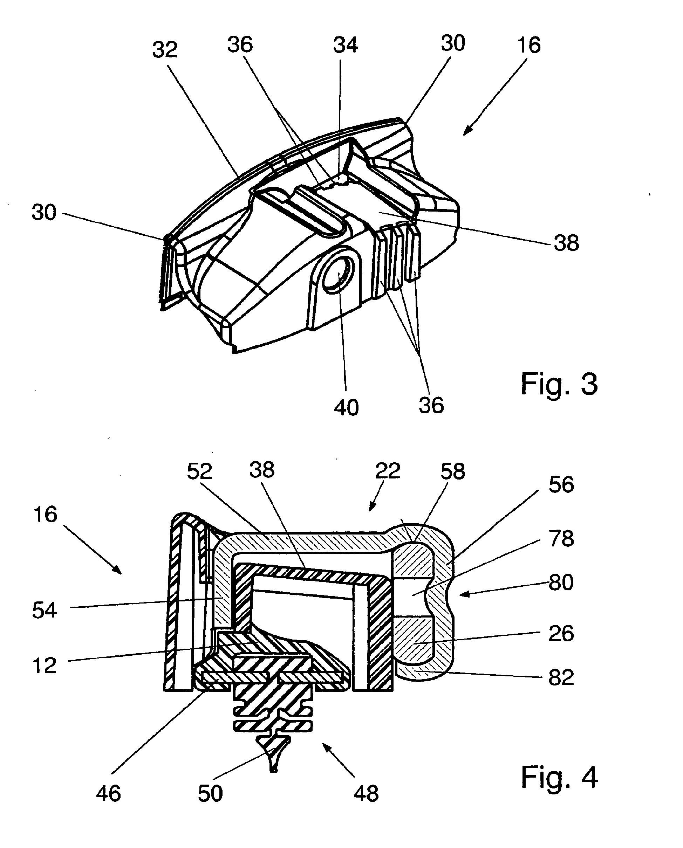

Von einem Wischblatt 10 ist in Fig. 1 ein Spoiler 12 und ein Anschlusselement 14 mit einer Abdeckkappe 16 dargestellt. An dem Anschlusselement 14 ist nach dem Sidelock-Prinzip ein Wischarm mit seiner Wischstange 18 schwenkbar um eine Schwenkachse 20 angelenkt. Der Wischarm und die Wischstange 18 verlaufen im Wesentlichen parallel zum Wischblatt 10. Verläuft die Wischstange 18 auf der Anströmseite des Wischblatts 10, ist die Wischstange im Bereich des Wischblatts 10 um die Längsachse so verdrillt, dass die breite Seite ihres rechteckigen Querschnittprofils geneigt zu einer Anströmrichtung 42 des Spoilers 12 verläuft und somit dessen Wirkung unterstützt. In einem Übergangsbereich 24 zu einem Ende 26 der Wischstange 18 hin ist diese außerdem so verdrillt, dass die breite Seite des Endes 26 etwa parallel zur benachbarten Seitenwand der Abdeckkappe 16 verläuft, die zur seitlichen Führung des Wischblatts 10 Führungsrippen 36 aufweist (Fig. 3).

An dem Ende 26 der Wischstange 18 ist ein Verbindungselement 22 befestigt, das mit einem Bügel 52 gegenüber der Schwenkachse 20 in Längsrichtung zum Antriebsende der Wischstange 18 versetzt die Abdeckkappe 16 teilweise übergreift. Ein abgewinkeltes Ende 54 des Bügels 52 taucht in eine Öffnung 34 der Abdeckkappe 16 ein. Die Öffnung 34 besitzt an der der Wischstange 18 zugewandten Seite ebenfalls Führungsrippen 36, sodass das Wischblatt 10 durch den Bügel 52 sowohl seitlich geführt ist, als auch in Längsrichtung der Schwenkachse 20 in der in Fig. 1 und Fig. 4 dargestellten Betriebsposition verriegelt ist. Somit erhält die Abdeckkappe 16 auf der Abströmseite eine durchgehende glatte Außenwand 32, an der sich kein Wasser festsetzen kann. Ferner verbindet sie in harmonischer Weise die Anschlussprofile 30 an den Enden der Abdeckkappe 16, in die der Spoiler 12 eingepasst ist. Die Anschlussprofile 30 ergeben zusammen mit der Außenwand 32 eine strömungsgünstige Abdeckkappe 16, wodurch die Wirksamkeit des Spoilers 12 unterstützt wird. Im Bereich der Schwenkachse 20 besitzt die Abdeckkappe 16 eine Lageröffnung 40, durch die ein Lagerstift 28 geführt ist, der entweder mit dem Anschlusselement 14 oder der Wischstange 18 fest verbunden ist, während er im jeweils anderen Teil drehbar gelagert ist. Damit das Wasser auf der Anströmseite gut abfließen kann, ist die Abdeckkappe 16 zumindest im Bereich der Öffnung 34 zweckmäßigerweise zur Fahrzeugscheibe hin offen.

In den dargestellten Ausführungsbeispielen besitzt der Lagerstift 28 einen Nietzapfen 62, der durch eine Bohrung in einer Befestigungsplatte 56 des Verbindungselements 22 und der Wischstange 18 gesteckt ist und bei der Montage vernietet wird. Die Abdeckkappe 16 hat an ihrer Oberseite im Bereich des Bügelelements 22 eine Deckwand 38, die zweckmäßigerweise zur Wischstange 18 hin fallend geneigt ist, sodass das Wasser bei Regen von der Abdeckkappe 16 gut zur Wischarmseite hin ablaufen kann.

Der Spoiler 12 besitzt zu einem Gummiprofil 48 (Fig. 4) hin zwei einander gegenüberliegende, nach innen offene Längsnuten 44. Diese nehmen jeweils eine Federschiene 46 auf, die als Tragelemente für das Gummiprofil 48 dienen. Die Federschienen 46 sind so vorgebogen, dass sie unter dem Anpressdruck der Wischstange 18 das Gummipröfil 48 mit einer Wischlippe 50 gleichmäßig gegen eine nicht dargestellte Fahrzeugscheibe drücken.

Bei dem Verbindungselement 22 nach Fig. 1 und Fig. 4 ist seine Befestigungsplatte 56 an der Außenseite des Endes 26 der Wischstange 18 angebracht. Dabei übergreift der Bügel 52 das Ende 26 und folgt der Kontur der Kuppe 58 der Wischstange 18, die somit formschlüssig im Bügel eingebettet ist. Zur Fixierung des Verbindungselements 22 auf der Wischstange 18 dient ein Nietzapfen 62 am Ende eines Lagerstifts 28. Dieser wird durch eine Bohrung in der Wischstange 18 und in der Befestigungsplatte 56 gesteckt und anschließend vernietet bzw. getaumelt. Zusätzlich kann die Wischstange 18 in Längsrichtung versetzt zum Nietzapfen ein Loch 78 besitzen, in das eine Prägung 80 der Befestigungsplatte 56 eingreift. Ferner kann die Befestigungsplatte 56 auf der dem Bügel 52 gegenüberliegenden Schmalseite des Endes 26 der Wischstange 18 eine zusätzliche Lasche 82 aufweisen, die an dem Ende 26 anliegt. Das Befestigungselement 22 in der Ausführung nach Fig. 1 besitzt in Verlängerung der Wischstange einen Stirnwinkel 60, der die Stirnseite des Endes 26 der Wischstange 18 überdeckt und gegebenenfalls scharfe Kanten abdeckt.

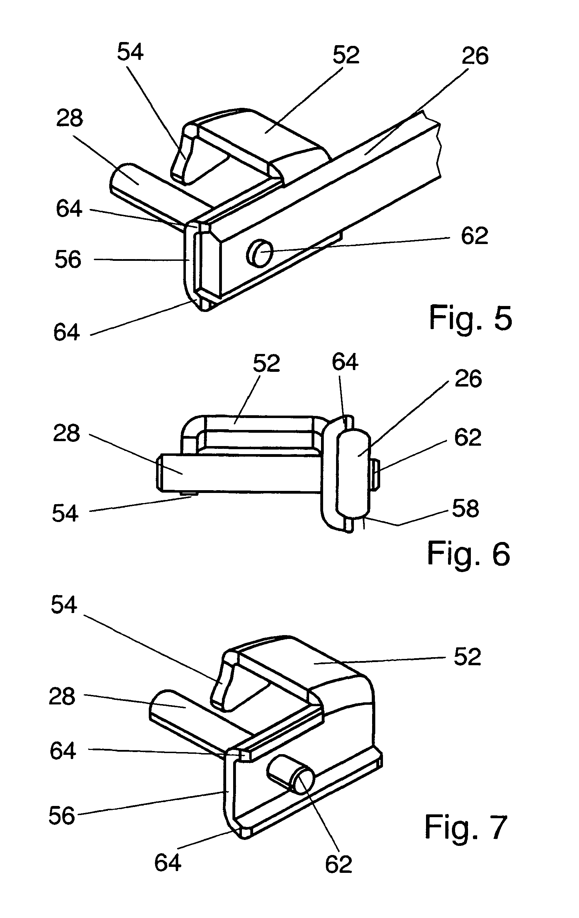

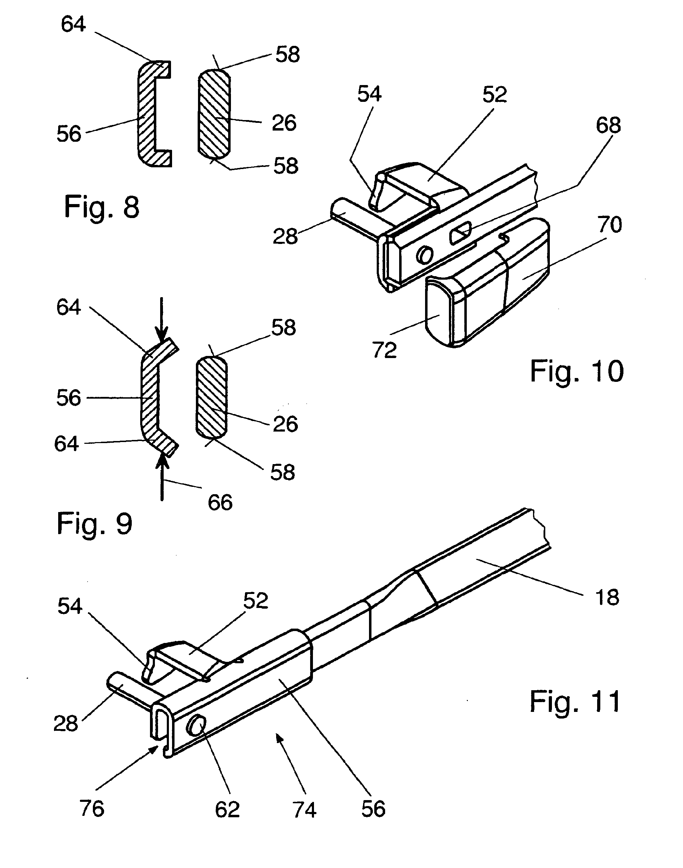

Bei der Ausführung nach Fig. 5 ist die Befestigungsplatte 56 an der Innenseite des Endes 26 der Wischstange 18 angeordnet. Sie besitzt an ihren Längsseiten krampenförmige Ränder 64 oder Laschen, die zum Ende 26 der Wischstange 18 hingebogen sind. Dabei kann der lichte Abstand zwischen den krampenförmigen Rändern 64 kleiner sein als die Breite des Endes 26 der Wischstange 18. In diesem Fall wird die Befestigungsplatte über die Wischstange gepresst, sodass sich zwischen den Rändern 64 und den Kuppen 58 des Endes 26 der Wischstange 18 ein Presssitz ergibt (Fig. 8). Eine andere Möglichkeit besteht darin, dass der lichte Abstand zwischen den Rändern 64 größer ist als die Breite der Wischstange. Die Ränder 64 werden dann bei der Montage mit dem Ende 26 verkrimpt, sodass sich an ihren Anlageflächen ein Presssitz ergibt (Fig. 9). Um das Verkrimpen zu erleichtern, ist es vorteilhaft, den Lagerstift 28 mit seinem Nietzapfen 62 in der Befestigungsplatte durch einen Presssitz vorzumontieren. Die krampenförmigen Ränder 64 können das Querschnittprofil des Endes 26 der Wischstange 18 so weit umgreifen, dass das Verbindungselement 22 in Richtung des Lagerstifts 28 formschlüssig gesichert ist.

Um der Verbindung zwischen dem Verbindungselement 22 und dem Ende 26 der Wischstange 18 ein strömungsgünstiges Profil zu geben und das Design des Scheibenwischers zu verbessern, ist am Ende 26 der Wischstange 18 eine Abdeckung 70 vorgesehen (Fig. 10), die zweckmäßigerweise auf das Ende 26 der Wischstange mit einem nicht dargestellten Rastzapfen in ein Rastloch 68 der Wischstange 18 eingeklippst wird. Die Abdeckung schließt sich harmonisch an das Verbindungselement 22 an und überdeckt mit einer Stirnwand 72 die Stirnseiten des Endes 26 der Wischstange 18 und des Verbindungselements 22.

Bei der Ausführung nach Fig. 11 umfasst das Verbindungselement 76 das Ende 26 der Wischstange 18 auf seinen zwei breiten Seiten. Es bildet ein offenes Profil 76, von dem mindestens eine Seitenwand als Befestigungsplatte 56 dient. Das Querschnittprofil 76 ist eng an das Profil des Endes 26 der Wischstange 18 angepasst. Es kann von der Stirnseite aus über das Ende 26 geschoben werden und wird dann mit dem Ende 26 der Wischstange 18 verkrimpt. Um einen festen Sitz auf der Wischstange 18 zu gewährleisten und den Kraftschluss durch einen Formschluss zu unterstützen, sind an der Wischstange 18 nicht näher dargestellte Warzen oder gleich wirkende Erhebungen vorgesehen.

## Patentansprüche

1. Wischarm mit einem Wischblatt (10), das aus einem Gummiprofil (48) mit einer Wischlippe (50) und mindestens einem Tragelement (46) aufgebaut ist und das über ein Anschlusselement (14) und ein Verbindungselement (22) mit dem Wischarm verbunden ist, wobei das am Wischarm befestigte Verbindungselement (22) mit einem Bügel (52) das Wischblatt (10) quer zu einer Schwenkachse (20) mittels seines zum Wischblatt (10) hin abgewinkelten Endes (54) sichert, **dadurch gekennzeichnet, dass** das Anschlusselement (14) eine Abdeckkappe (16) aufweist und die Abdeckkappe (16) an ihrer von dem Gummiprofil (48) abgewandten Seite im Bereich des Verbindungselements (22) eine Öffnung (34) oder Vertiefung für das abgewinkelte Ende (54) des Bügels (52) aufweist, der in montierter Position nur teilweise die Abdeckkappe (16) übergreift, wobei die Abdeckkappe (16) auf der Abströmseite eine durchgehende glatte Außenwand (32) aufweist.

2. Wischarm mit einem Wischblatt (10) nach Anspruch 1, **dadurch gekennzeichnet, dass** eine Deckwand (38) der Abdeckkappe (16) unterhalb des Bügels (52) geneigt zur Anströmrichtung (42) verläuft.

3. Wischarm mit einem Wischblatt (10) nach Anspruch 1 oder 2, **dadurch gekennzeichnet, dass** die Abdeckkappe (16) einerseits an der Öffnung (34) bzw. der Vertiefung und andererseits an einer dem Wischarm zugewandten Außenseite Führungsrippen (36) besitzt.

4. Wischarm mit einem Wischblatt (10) nach einem der vorhergehenden Ansprüche, **dadurch gekennzeichnet, dass** ein Spoiler (12) vorgesehen ist, und die Abdeckkappe (16) an ihren Enden jeweils mit einem Anschlussprofil (30) harmonisch in das Profil des Spoilers (12) übergeht.

5. Wischarm mit einem Wischblatt (10) nach einem der vorhergehenden Ansprüche, **dadurch gekennzeichnet, dass** der Wischarm eine Wischstange (18) mit einem rechteckigen Querschnitt umfasst, die in montierter Position zumindest teilweise auf der Anströmseite des Wischblatts (10) verläuft und um ihre Längsachse so verdreht ist, dass mindestens im Bereich des Wischblatts (10) die Breitseite der Wischstange (18) zur Unterstützung des Spoilers (12) geneigt zur Anströmrichtung (42) verläuft und ihr Ende (26) mit der Breitseite parallel zu den Führungsrippen (36) an der Außenseite der Abdeckkappe (16) gerichtet ist.

6. Wischarm mit einem Wischblatt (10) nach einem der vorhergehenden Ansprüche, **dadurch gekennzeichnet, dass** das Verbindungselement (22) eine parallel zu einer breiten Seite der Wischstange (18) verlaufende Befestigungsplatte (56) besitzt, an der der Bügel (52) angeformt ist, wobei der Lagerstift (28) an einem Ende einen Nietzapfen (62) aufweist, mit dem die Befestigungsplatte (56) an der Wischstange (18, 26) befestigt ist.

7. Wischarm mit einem Wischblatt (10) nach Anspruch 6, **dadurch gekennzeichnet, dass** der Nietzapfen (62) in der Befestigungsplatte (56) mit einem Presssitz vormontiert ist.

8. Wischarm mit einem Wischblatt (10) nach Anspruch 6 oder 7, **dadurch gekennzeichnet, dass** das Verbindungselement (22) an seinen Längsseiten zur Wischstange (18) gebogene, krampenförmige Ränder (64) besitzt, die mit einem Presssitz an der Außenkontur des Endes (26) der Wischstange (18) im Bereich ihrer Kuppen (58) anliegen.

9. Wischarm mit einem Wischblatt (10) nach Anspruch 8, **dadurch gekennzeichnet, dass** der lichte Abstand zwischen den krampenförmigen Rändern (64) kleiner ist als die Breite des Endes (26) der Wischstange (18), sodass sich beim Zusammenfügen ein Presssitz ergibt.

10. Wischarm mit einem Wischblatt (10) nach Anspruch 8, **dadurch gekennzeichnet, dass** der lichte Abstand zwischen den krampenförmigen Rändern (64) größer ist als die Breite des Endes (26) der Wischstange (18), sodass sich durch Verkrimpen der krampenförmigen Ränder (64) ein Presssitz ergibt.

11. Wischarm mit einem Wischblatt (10) nach einem der Ansprüche 6 bis 10, **dadurch gekennzeichnet, dass** das Ende (26) der Wischstange (18) in Längsrichtung versetzt zum Laqerstift (28) ein Loch (78) besitzt, in das im montierten Zustand des Verbindungselements (22) eine Prägung (80) eingreift.

12. Wischarm mit einem Wischblatt (10) nach einem der Ansprüche 6 bis 11, **dadurch gekennzeichnet, dass** die Befestigungsplatte (56) mit einem Stirnwinkel (60) die Stirnseite des Endes (26) der Wischstange (18) überdeckt.

13. Wischarm mit einem Wischblatt (10) nach einem der Ansprüche 6 bis 12, **dadurch gekennzeichnet, dass** die Befestigungsplatte (56) auf der Außenseite des Endes (26) der Wischstange (18) angebracht ist und der Bügel (52) das Ende (26) übergreift und der Kontur folgend an der Kuppe(58) des Endes (26) anliegt.

14. Wischarm mit einem Wischblatt (10) nach einem der Ansprüche 6 bis 11, **dadurch gekennzeichnet, dass** die Befestigungsplatte (56) auf der Innenseite des Endes (26) der Wischstange (18) angebracht ist und auf der gegenüberliegenden Seite des Endes (26) eine Abdeckung (70) vorgesehen ist.

15. Wischarm mit einem Wischblatt (10) nach Anspruch 14, **dadurch gekennzeichnet, dass** die Abdeckung (70) mit einer Stirnwand (72) die Stirnseite des Endes (26) und des Verbindungselements (22) überdeckt.

16. Wischarm mit einem Wischblatt (10) nach Anspruch 13 oder 14, **dadurch gekennzeichnet, dass** die Abdeckung (70) in einem Rastloch (68) des Endes (26) der Wischstange (18) eingeklippst ist.

17. Wischarm mit einem Wischblatt (10) nach Anspruch 6, **dadurch gekennzeichnet, dass** die Befestigungsplatte (56) eine Seitenwand eines offenen Querschnittprofils (76) eines Verbindungselements (74) bildet, das über das Ende (26) der Wischstange (18) geschoben ist.

18. Wischarm mit einem Wischblatt (10) nach Anspruch 17, **dadurch gekennzeichnet, dass** das Verbindungselement (74) durch den Nietzapfen (62) des Lagerstifts (28) auf dem Ende (26) der Wischstange (18) befestigt ist.

## Claims

1. Wiper arm having a wiper blade (10), which is composed of a rubber profiled element (48) with a wiper lip (50) and at least one support element (46) and which is connected to the wiper arm via a fixing element (14) and a connection element (22), wherein the connection element (22) fastened to the wiper arm and having a clip (52) secures the wiper blade (10) transversely with respect to a pivot axis (20) by means of an end (54) of the clip (52) bent toward the wiper blade (10), **characterized in that** the fixing element (14) has a covering cap (16), and the covering cap (16), on its side facing away from the rubber profiled element (48) in the region of the connection element (22), has an opening (34) or recess for the bent end (54) of the clip (52) which, in the mounted position, only partially engages over the covering cap (16), wherein the covering cap (16) has a continuous smooth outer wall (32) on the outflow side.

2. Wiper arm having a wiper blade (10) according to Claim 1, **characterized in that** a top wall (38) of the covering cap (16) runs underneath the clip (52) at an inclination with respect to the inflow direction (42).

3. Wiper arm having a wiper blade (10) according to Claim 1 or 2, **characterized in that** the covering cap (16) has guide ribs (36), on the one hand on the opening (34) or the recess, and, on the other hand, on an outer face directed toward the wiper arm.

4. Wiper arm having a wiper blade (10) according to one of the preceding claims, **characterized in that** a spoiler (12) is provided, and the covering cap (16), at each of its ends, blends harmoniously with a connecting profile (30) into the profile of the spoiler (12).

5. Wiper arm having a wiper blade (10) according to one of the preceding claims, **characterized in that** the wiper arm comprises a wiper rod (18) which has a rectangular cross section and which, in the mounted position, runs at least partially on the inflow side of the wiper blade (10) and is turned about its longitudinal axis in such a way that, at least in the region of the wiper blade (10), the broad side of the wiper rod (18) for supporting the spoiler (12) runs at an inclination with respect to the inflow direction (42), and its end (26) is oriented with the broad side parallel to the guide ribs (36) on the outer side of the covering cap (16).

6. Wiper arm having a wiper blade (10) according to one of the preceding claims, **characterized in that** the connection element (22) has a fastening plate (56), which runs parallel to a broad side of the wiper rod (18) and on which the clip (52) is formed, wherein the bearing pin (28) has, at one end, a rivet pin (62), with which the fastening plate (56) is fastened to the wiper rod (18, 26).

7. Wiper arm having a wiper blade (10) according to Claim 6, **characterized in that** the rivet pin (62) is pre-mounted in the fastening plate (56) with a press fit.

8. Wiper arm having a wiper blade (10) according to Claim 6 or 7, **characterized in that** the connection element (22) has, on its longitudinal sides, bracket-like edges (64) which are bent toward the wiper rod (18) and which bear with a press fit on the outer contour of the end (26) of the wiper rod (18) in the region of its rounded tips (58).

9. Wiper arm having a wiper blade (10) according to Claim 8, **characterized in that** the clearance between the bracket-like edges (64) is smaller than the width of the end (26) of the wiper rod (18), such that a press fit results when they are joined.

10. Wiper arm having a wiper blade (10) according to Claim 8, **characterized in that** the clearance between the bracket-like edges (64) is greater than the width of the end (26) of the wiper rod (18), such that a press fit is produced by crimping the bracket-like edges (64).

11. Wiper arm having a wiper blade (10) according to one of Claims 6 to 10, **characterized in that** the end (26) of the wiper rod (18) has a hole (78) offset in the longitudinal direction from the bearing pin (28), in which hole an indentation (80) engages in the mounted state of the connection element (22).

12. Wiper arm having a wiper blade (10) according to one of Claims 6 to 11, **characterized in that** the fastening plate (56) covers the front face of the end (26) of the wiper rod (18) with a front angle (60).

13. Wiper arm having a wiper blade (10) according to one of Claims 6 to 12, **characterized in that** the fastening plate (56) is mounted on the outer side of the end (26) of the wiper rod (18), and the clip (52) engages over the end (26) and, following the contour, bears on the rounded tip (58) of the end (26).

14. Wiper arm having a wiper blade (10) according to one of Claims 6 to 11, **characterized in that** the fastening plate (56) is mounted on the inner side of the end (26) of the wiper rod (18), and a covering (70) is provided on the opposite side of the end (26).

15. Wiper arm having a wiper blade (10) according to Claim 14, **characterized in that** a front wall (72) of the covering (70) covers the front face of the end (26) and of the connection element (22).

16. Wiper arm having a wiper blade (10) according to Claim 13 or 14, **characterized in that** the covering (70) clips into a snap-in hole (68) of the end (26) of the wiper rod (18).

17. Wiper arm having a wiper blade (10) according to Claim 6, **characterized in that** the fastening plate (56) forms a side wall of an open cross-sectional profile (76) of a connection element (74), which is pushed over the end (26) of the wiper rod (18).

18. Wiper arm having a wiper blade (10) according to Claim 17, **characterized in that** the connection element (74) is fastened by the rivet pin (62) of the bearing pin (28) on the end (26) of the wiper rod (18).

## Revendications

1. Bras d'essuie-glace comprenant un balai d'essuie-glace (10), constitué d'un profilé en caoutchouc (48) avec une lèvre de balai d'essuie-glace (50) et au moins un élément de support (46), et connecté par le biais d'un élément de raccordement (14) et d'un élément de liaison (22) au bras d'essuie-glace, l'élément de liaison (22) fixé au bras d'essuie-glace fixant, à l'aide d'un étrier (52), le balai d'essuie-glace (10) transversalement à un axe de pivotement (20) au moyen de son extrémité (54) coudée vers le balai d'essuie-glace (10), **caractérisé en ce que** l'élément de raccordement (14) présente un capuchon de recouvrement (16) et le capuchon de recouvrement (16) présente, au niveau de son côté opposé au profilé en caoutchouc (48), dans la région de l'élément de liaison (22), une ouverture (34) ou un renfoncement pour l'extrémité coudée (54) de l'étrier (52), qui, dans la position montée, vient en prise par le dessus uniquement en partie avec le capuchon de recouvrement (16), le capuchon de recouvrement (16) présentant, côté écoulement, une paroi extérieure lisse et continue (32).

2. Bras d'essuie-glace comprenant un balai d'essuie-glace (10) selon la revendication 1, **caractérisé en ce qu'**une paroi de couverture (38) du capuchon de recouvrement (16) s'étend sous l'étrier de manière inclinée par rapport à la direction d'afflux (42).

3. Bras d'essuie-glace comprenant un balai d'essuie-glace (10) selon la revendication 1 ou 2, **caractérisé en ce que** le capuchon de recouvrement (16) possède d'une part au niveau de l'ouverture (34) ou du renfoncement et d'autre part au niveau d'un côté extérieur tourné vers le bras d'essuie-glace, des nervures de guidage (36).

4. Bras d'essuie-glace comprenant un balai d'essuie-glace (10) selon l'une quelconque des revendications précédentes, **caractérisé en ce qu'**un déflecteur (12) est prévu, et le capuchon de recouvrement (16) se prolonge au niveau de ses extrémités à chaque fois par un profilé de raccordement (30) de manière harmonieuse dans le profilé du déflecteur (12).

5. Bras d'essuie-glace comprenant un balai d'essuie-glace (10) selon l'une quelconque des revendications précédentes, **caractérisé en ce que** le bras d'essuie-glace comprend une tige d'essuie-glace (18) de section transversale rectangulaire, qui, dans la position montée, s'étend au moins en partie sur le côté afflux du balai d'essuie-glace (10) et qui est tournée autour de son axe longitudinal de telle sorte qu'au moins dans la région du balai d'essuie-glace (10), le côté large de la tige d'essuie-glace (18) s'étende de manière inclinée vers la direction d'afflux (42) pour supporter le déflecteur (12) et que son extrémité (26) soit orientée avec le côté large parallèlement aux nervures de guidage (36) du côté extérieur du capuchon de recouvrement (16).

6. Bras d'essuie-glace comprenant un balai d'essuie-glace (10) selon l'une quelconque des revendications précédentes, **caractérisé en ce que** l'élément de liaison (22) possède une plaque de fixation (56) s'étendant parallèlement à un côté large de la tige d'essuie-glace (18), sur laquelle plaque de fixation est façonné l'étrier (52), la goupille de palier (28) présentant, à une extrémité, un tourillon de rivetage (62) avec lequel la plaque de fixation (56) est fixée à la tige d'essuie-glace (18, 26).

7. Bras d'essuie-glace comprenant un balai d'essuie-glace (10) selon la revendication 6, **caractérisé en ce que** le tourillon de rivetage (62) est prémonté dans la plaque de fixation (56) avec un ajustement serré.

8. Bras d'essuie-glace comprenant un balai d'essuie-glace (10) selon la revendication 6 ou 7, **caractérisé en ce que** l'élément de liaison (22) possède, au niveau de ses côtés longitudinaux, des bords (64) en forme de crampons cintrés vers la tige d'essuie-glace (18), lesquels s'appliquent avec un ajustement serré contre le contour extérieur de l'extrémité (26) de la tige d'essuie-glace (18) dans la région de ses bouts (58).

9. Bras d'essuie-glace comprenant un balai d'essuie-glace (10) selon la revendication 8, **caractérisé en ce que** l'espacement intérieur entre les bords en forme de crampons (64) est inférieur à la largeur de l'extrémité (26) de la tige d'essuie-glace (18), de sorte que l'on obtienne un ajustement serré lors de leur assemblage.

10. Bras d'essuie-glace comprenant un balai d'essuie-glace (10) selon la revendication 8, **caractérisé en ce que** l'espacement intérieur entre les bords en forme de crampons (64) est supérieur à la largeur de l'extrémité (26) de la tige d'essuie-glace (18), de sorte que l'on obtienne par sertissage des bords en forme de crampons (64) un ajustement serré.

11. Bras d'essuie-glace comprenant un balai d'essuie-glace (10) selon l'une quelconque des revendications 6 à 10, **caractérisé en ce que** l'extrémité (26) de la tige d'essuie-glace (18) possède un trou (78) décalé dans la direction longitudinale par rapport à la tige de palier (28), dans lequel trou vient en prise un gaufrage (80) dans l'état monté de l'élément de liaison (22).

12. Bras d'essuie-glace comprenant un balai d'essuie-glace (10) selon l'une quelconque des revendications 6 à 11, **caractérisé en ce que** la plaque de fixation (56) recouvre, avec un coude frontal (60), le côté frontal de l'extrémité (26) de la tige d'essuie-glace (18).

13. Bras d'essuie-glace comprenant un balai d'essuie-glace (10) selon l'une quelconque des revendications 6 à 12, **caractérisé en ce que** la plaque de fixation (56) est montée sur le côté extérieur de l'extrémité (26) de la tige d'essuie-glace (18) et l'étrier (52) vient en prise par le haut avec l'extrémité (26) et s'applique contre le bout (58) de l'extrémité (26) en suivant le contour.

14. Bras d'essuie-glace comprenant un balai d'essuie-glace (10) selon l'une quelconque des revendications 6 à 11, **caractérisé en ce que** la plaque de fixation (56) est montée sur le côté intérieur de l'extrémité (26) de la tige d'essuie-glace (18) et un recouvrement (70) est prévu sur le côté opposé de l'extrémité (26).

15. Bras d'essuie-glace comprenant un balai d'essuie-glace (10) selon la revendication 14, **caractérisé en ce que** le recouvrement (70) recouvre avec une paroi frontale (72) le côté frontal de l'extrémité (26) et de l'élément de liaison (22).

16. Bras d'essuie-glace comprenant un balai d'essuie-glace (10) selon la revendication 13 ou 14, **caractérisé en ce que** le recouvrement (70) est enclipsé dans un trou d'encliquetage (68) de l'extrémité (26) de la tige d'essuie-glace (18).

17. Bras d'essuie-glace comprenant un balai d'essuie-glace (10) selon la revendication 6, **caractérisé en ce que** la plaque de fixation (56) forme une paroi latérale d'un profil ouvert en section transversale (76) d'un élément de liaison (74) qui est poussé par-dessus l'extrémité (26) de la tige d'essuie-glace (18).

18. Bras d'essuie-glace comprenant un balai d'essuie-glace (10) selon la revendication 17, **caractérisé en ce que** l'élément de liaison (74) est fixé par le tourillon de rivetage (62) de la goupille de palier (28) sur l'extrémité (26) de la tige d'essuie-glace (18).
